# EUROPÄISCHE PATENTSCHRIFT

(11) **EP 1 410 962 B1**
(45) Veröffentlichungstag und Bekanntmachung des Hinweises auf die Patenterteilung: **16.11.2005**
(21) Anmeldenummer: 03020419.2
(22) Anmeldetag: 11.09.2003
(51) Int. Cl.: B60R 25/02

(54) **Vorrichtung zum Sperren der Lenkspindel eines Kraftfahrzeugs**
Device for locking the steering spindle of a motor vehicle
Dispositf de blocage de l'arbre de direction d'un véhicule automobile

(30) Priorität: 14.10.2002 DE 10247802
(43) Veröffentlichungstag der Anmeldung: 21.04.2004
(73) Patentinhaber: Huf Hülsbeck & Fürst GmbH & Co. KG, 42551 Velbert (DE)
(72) Erfinder: Zillmann,Horst, 81243 München (DE)
(74) Vertreter: Oedekoven, Wolf Dieter

(56) Entgegenhaltungen:
- EP-A- 1 176 065
- DE-A- 10 022 831
- DE-A- 10 103 182
- DE-C- 4 436 326
- US-B1- 6 354 117

## Beschreibung

Die Erfindung bezieht sich auf eine Vorrichtung zum Sperren der Lenkspindel eines Kraftfahrzeugs gegen Drehen der im Oberbegriff des Patentanspruchs 1 angegebenen Art.

Vorrichtungen zur Verriegelung der Lenkspindel von Kraftfahrzeugen, so daß sie nicht mehr gedreht werden kann, mittels eines in einem Gehäuse über ein hin- und herdrehbares Steuerglied zwischen einer Verriegelungs- oder Sperrstellung und einer Entriegelungs- oder Freigabestellung axial hin- und herbewegbaren Sperrbolzens, welcher in der Verriegelungs- oder Sperrstellung mit Hilfe eines im Gehäuse beweglich gelagerten, federbelasteten Sicherungsgliedes blockierbar ist, das unter der Wirkung seiner Federbelastung in eine seitliche Vertiefung des Sperrbolzens eingreift und zur Bewegung entgegen der Wirkung seiner Federbelastung aus der Vertiefung heraus mit dem Steuerglied des Sperrbolzens zusammenwirkt, sind bekannt (DE-AS 1 780 563, GB 2 298 229 A, DE 196 53 860 C1). Dabei ist das Steuerglied zur Bewegung des Sperrbolzens von einem Steuernocken gebildet, welcher um eine zur Längsachse des Sperrbolzens senkrechte Achse hin- und herschwenkbar ist, mit dem Sperrbolzen über einen Exzenter zusammenwirkt und mittels eines zur Schwenkachse des Steuernockens koaxialen, schlüsselbetätigten Schließzylinders (DE-AS 1 780 563, GB 2 298 229 A) oder eines reversierbaren Elektromotors (DE 196 53 860 C!) bewegt wird. Das Sicherungsglied zur Blockierung des Sperrbolzens in seiner Verriegelungs- oder Sperrstellung gegen unbefugte Bewegung in seine Entriegelungs- oder Freigabestellung, so daß die zugehörige Kraftfahrzeuglenkspindel gedreht werden kann, ist von einem einarmigen Schwenkhebel gebildet, welcher an einem Ende um eine zur Längsachse des Sperrbolzens parallele Achse (DE-AS 1 780 563, Fig. 1 bis 6) oder eine zur Schwenkachse des Steuernockens parallele Achse (GB 2 298 229 A, DE 196 53 860 C1) schwenkbar gelagert ist, unter der Wirkung einer Feder steht, um mit dem anderen Ende in die seitliche Vertiefung des Sperrbolzens einzugreifen, und zwischen seinen beiden Enden einen Seitenarm zur Anlage am Steuernocken aufweist, um entgegen der Wirkung der Federbelastung aus der Vertiefung des Sperrbolzens herausgeschwenkt zu werden, wenn der Steuernocken zur Bewegung des Sperrbolzens aus der Verriegelungs- oder Sperrstellung in die Entriegelungs- oder Freigabestellung verschwenkt wird.

Außerdem ist es bei Vorrichtungen zum Sperren der Lenkspindel eines Kraftfahrzeugs gegen Drehen mittels eines in einem Gehäuse zwischen einer Sperrstellung und einer Freigabestellung axial hin- und herbewegbaren Sperrbolzens bekannt, den Sperrbolzen in seiner Sperrstellung mit Hilfe eines mit einer seitlichen Vertiefung des Sperrbolzens zusammenwirkenden, im Gehäuse axial verschieblich gelagerten, federbelasteten Sicherungsstiftes zu blockieren, wenn ein Teil des Gehäuses abgebrochen wird. Dabei wird der Sicherungsstift durch einen im Gehäuse parallel zum Sperrbolzen axial verschieblich gelagerten Rückhaltedraht oder Rückhaltestift entgegen der Wirkung seiner Federbelastung abgestützt, welcher an seinem sicherungsstiftfernen Ende mit dem Schließzylinder zur Bewegung des Sperrbolzens oder dem mit dem Zylinderkern des Schließzylinders verbundenen Sperrbolzen-Steuernocken zusammenwirkt, um sich beim Abbrechen des den Schließzylinder und gegebenenfalls den Steuernocken umschließenden Gehäuseteils axial zu verschieben und den Sicherungsstift freizugeben, so daß er unter der Wirkung seiner Federbelastung in Eingriff mit der seitlichen Vertiefung des Sperrbolzens läuft (DE 31 31 558 C1, DE 92 08 698 U1). Oder der Sicherungsstift wird durch einen innen vom Gehäuse abstehenden Rückhaltearm entgegen der Wirkung seiner Federbelastung abgestützt, um dann vom Rückhaltearm freigegeben zu werden und unter der Wirkung seiner Federbelastung in Eingriff mit der seitlichen Vertiefung des Sperrbolzens zu laufen, wenn der mit dem Rückhaltearm versehene Teil des Gehäuses entfernt wird (DE 100 41 984 A1).

Schließlich ist eine Vorrichtung der im Oberbegriff des Patentanspruchs 1 angegebenen Art bekannt, bei welcher das Steuerglied im Gehäuse nicht nur drehbar, sondern auch axial verschiebbar und auf die zugehörige Kraftfahrzeuglenkspindel zu federbelastet ist, das Steuerglied und der Sperrbolzen koaxial zueinander angeordnet und gegenseitig verschraubbar sind und der Sperrbolzen mittels des Sicherungsgliedes in der Freigabestellung blockiert wird, welches von einem ersten Vorsprung mit in einer zur Längsachse des Sperrbolzens senkrechten Ebene verlaufender Längsachse am einen Ende eines U-förmigen Bügels gebildet ist, an dessen anderem Ende ein ähnlicher zweiter Vorsprung für das Zusammenwirken mit der Steuerfläche des Steuergliedes vorgesehen ist und der in der Mitte zwischen dem ersten und dem zweiten Vorsprung einen entgegengesetzt gerichteten dritten Vorsprung aufweist, welcher in einer Bohrung des Gehäuses axial verschieblich gelagert und durch eine Schraubendruckfeder in Richtung auf das Steuerglied und den Sperrbolzen belastet ist. Wenn der Sperrbolzen aus seiner Freigabestellung in die Sperrstellung bewegt werden soll, wird er zunächst von dem ersten Vorsprung des Bügels abgestützt und verschraubt sich das Steuerglied auf dem Sperrbolzen zum zweiten Vorsprung des Bügels hin, um schließlich mit der Steuerfläche des Steuergliedes am zweiten Vorsprung des Bügels zur Anlage zu kommen und den Bügel entgegen der Wirkung seiner Federbelastung vom Steuerglied und Sperrbolzen wegzuschieben, so daß der erste Vorsprung des Bügels den Sperrbolzen freigibt, der dann unter der Wirkung der Federbelastung des Steuergliedes zusammen mit demselben schlagartig in die Sperrstellung läuft (DE 101 03 182 A1).

Der Erfindung liegt die Aufgabe zugrunde, eine Vorrichtung der im Oberbegriff des Patentanspruchs 1 angegebenen Art zu schaffen, welche auf einfache Weise stets eine zuverlässige Blockierung des Sperrbolzens in seiner Sperrstellung gewährleistet, so daß er weder durch Prellschläge noch mittels eines Magneten oder auf andere Weise unbefugt aus der Sperrstellung herausbewegt werden kann, und welche ferner das Aufheben der Blockade des Sperrbolzens in seiner Sperrstellung bei unbefugter Entfernung des Verschlußdeckels einer Montageöffnung des Gehäuses auf einfache Weise verhindert.

Diese Aufgabe ist durch die im kennzeichnenden Teil des Patentanspruchs 1 aufgeführten Merkmale gelöst. Vorteilhafte Ausgestaltungen der Vorrichtung nach der Erfindung sind in den restlichen Patentansprüchen angegeben.

Die Erfindung läßt sich besonders vorteilhaft bei Sperrvorrichtungen für Kraftfahrzeuglenkspindeln derjenigen Art verwirklichen, wie beispielsweise aus der DE 101 09 609 C1 bekannt.

Nachstehend sind zwei Ausführungsformen der erfindungsgemäßen Vorrichtung zum Sperren der Lenkspindel eines Kraftfahrzeugs anhand von Zeichnungen beispielsweise beschrieben. Darin zeigt :
Fig. 1 die Ansicht in Richtung des Pfeils I in Fig. 2 einer ersten Ausführungsform, wobei der Sperrbolzen sich in seiner Sperrstellung befindet;
Fig. 2 die Draufsicht in Richtung des Pfeils II in Fig. 1 ohne den Verschlußdeckel der Montageöffnung des Gehäuses und ohne die zugehörige Lenksäule;
Fig. 3 den Schnitt entlang der Linie III - III in Fig. 2 mit dem die Montageöffnung des Gehäuses abdeckenden Verschlußdeckel;
Fig. 4 die Draufsicht gemäß Fig. 2, wobei nur der Sperrbolzen, das Steuerglied und der Sicherungsstift des Sperrbolzens, das mit dem Sicherungsstift zusammenwirkende Tastglied und der am Tastglied angreifende Arm des Verschlußdeckels der Montageöffnung des Gehäuses dargestellt sind;
Fig. 5 den Schnitt entlang der Linie V - V in Fig. 4, wobei die zugehörige Lenkspindel ebenfalls dargestellt ist;
Fig. 6 die Ansicht in Richtung des Pfeils VI in Fig. 4, wobei die zugehörige Lenkspindel ebenfalls dargestellt ist;
Fig. 7 die Ansicht der Komponenten gemäß Fig. 4 in Richtung des Pfeils VII in Fig. 5;
Fig. 8 perspektivisch die Ansicht in Richtung des Pfeils VIII in Fig. 4, wobei zusätzlich das Führungsteil des Sicherungsstiftes dargestellt ist;
Fig. 9 die Draufsicht gemäß Fig.4, wobei der Sperrbolzen sich in seiner Freigabestellung befindet;
Fig. 10 den Schnitt entlang der Linie X - X in Fig. 9, wobei die zugehörige Lenkspindel ebenfalls dargestellt ist;
Fig. 11 die Ansicht in Richtung des Pfeils XI in Fig. 9, wobei die zugehörige Lenkspindel ebenfalls dargestellt ist;
Fig. 12 die Ansicht der Komponenten gemäß Fig. 9 in Richtung des Pfeils XII in Fig. 10;
Fig. 13 die Ansicht gemäß Fig. 6, wobei der Sicherungsstift die seitliche Vertiefung des Sperrbolzens verlassen hat;
Fig. 14 die Ansicht in Richtung des Pfeils XIV in Fig. 13 ohne die Lenkspindel;
Fig. 15 die Ansicht gemäß Fig. 6, wobei der Sperrbolzen sich in einer Vorsperrstellung befindet;
Fig. 16 die Ansicht in Richtung des Pfeils XVI in Fig. 15 ohne die Lenkspindel;
Fig. 17 die Ansicht gemäß Fig. 6 ohne die Lenkspindel, wobei der Verschlußdeckel der Montageöffnung des Gehäuses angehoben worden ist;
Fig. 18 die Ansicht gemäß Fig. 8, wobei der Verschlußdeckel der Montageöffnung des Gehäuses angehoben worden ist;
Fig. 19 die Fig. 6 entsprechende Ansicht einer zweiten Ausführungsform;
Fig. 20 die Fig. 7 entsprechende Ansicht der zweiten Ausführungsform ohne den Sicherungsstift;
Fig. 21 die Fig. 11 entsprechende Ansicht der zweiten Ausführungsform;
Fig. 22 die Fig. 12 entsprechende Ansicht der zweiten Ausführungsform ohne den Sicherungsstift;
Fig. 23 die Ansicht gemäß Fig. 19, wobei der Verschlußdeckel der Montageöffnung des Gehäuses entfernt worden ist.

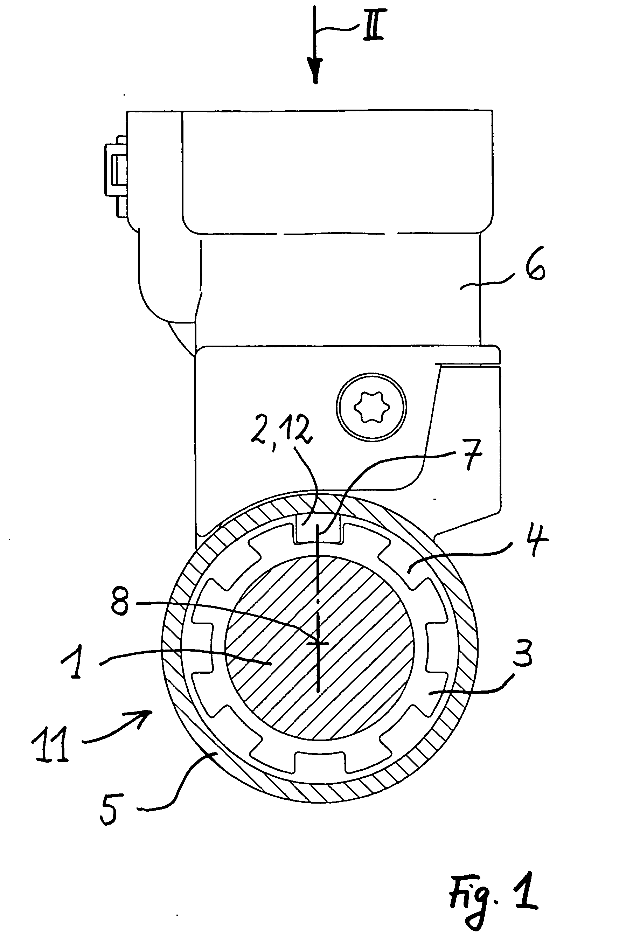

Die in Fig. 1 bis 18 dargestellte Vorrichtung zum Sperren der Lenkspindel 1 eines Kraftfahrzeugs gegen Drehen weist einen Sperrbolzen 2 auf, welcher mit einer auf der Lenkspindel 1 befestigten Sperrhülse 3 mit Sperrnuten 4 zusammenwirkt. Die Lenkspindel 1 und die Sperrhülse 3 sind von einem Mantelrohr 5 mit einer nicht wiedergegebenen Durchgangsöffnung für den Sperrbolzen 2 umschlossen.

Der Sperrbolzen 2 weist einen im wesentlichen rechteckigen Querschnitt auf und ist in einem nicht dargestellten Kanal entsprechenden Querschnitts eines Gehäuses 6 axial verschieblich gelagert. Die Längsachse 7 des Sperrbolzens 2 schneidet die gemeinsame Längsachse 8 der Lenkspindel 1 und des dazu koaxialen Mantelrohres 5 rechtwinklig . Das Gehäuse 6 ist auf der der Lenkspindel 1 und dem Mantelrohr 5 abgewandten Seite mit einer durch einen Deckel 9 verschlossenen Montageöffnung 10 versehen und am Mantelrohr 5 befestigt, wie aus Fig. 1 hervorgeht. Die Lenkspindel 1 und das Mantelrohr 5 bilden die Lenksäule 11 des Kraftfahrzeugs.

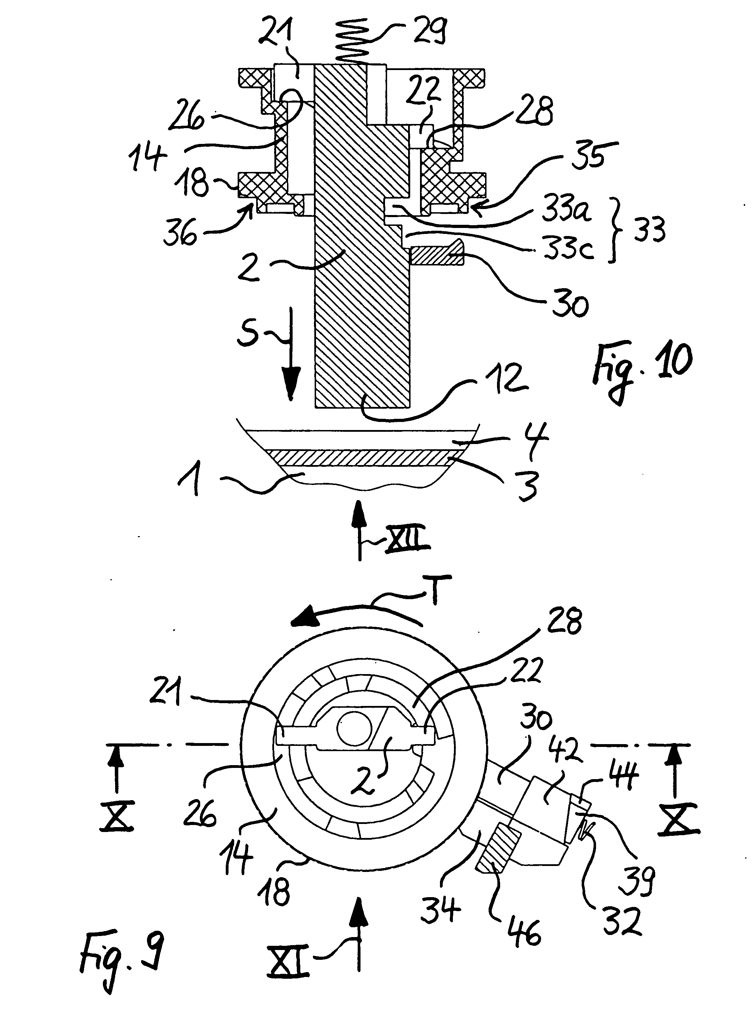

Der Sperrbolzen 2 ist zwischen der aus Fig. 1 bis 8 ersichtlichen Sperrstellung, in welcher er mit seinem der Lenkspindel 1 benachbarten Ende 12 in eine Sperrnut 4 der Sperrhülse 3 eingreift, so daß die Lenkspindel 1 nicht mehr gedreht werden kann, und der aus Fig. 9 bis 12 ersichtlichen Freigabestellung hin- und herbewegbar, in welcher der Sperrbolzen 2 mit seinem Ende 12 in keine Sperrnut 4 der Sperrhülse 3 eingreift und die Lenkspindel 1 freigibt, so daß sie gedreht werden kann.

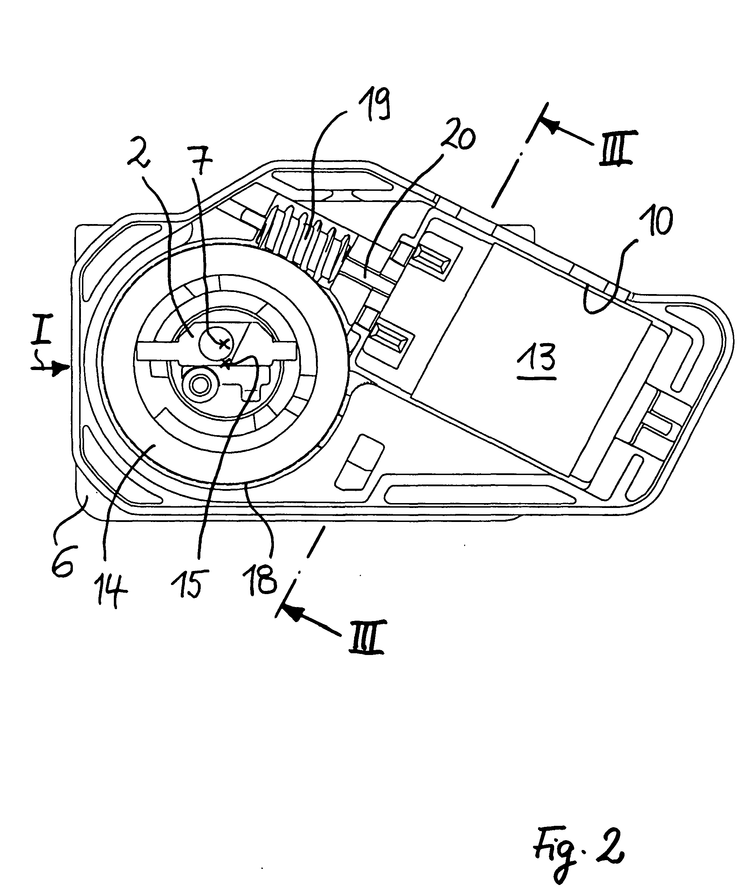

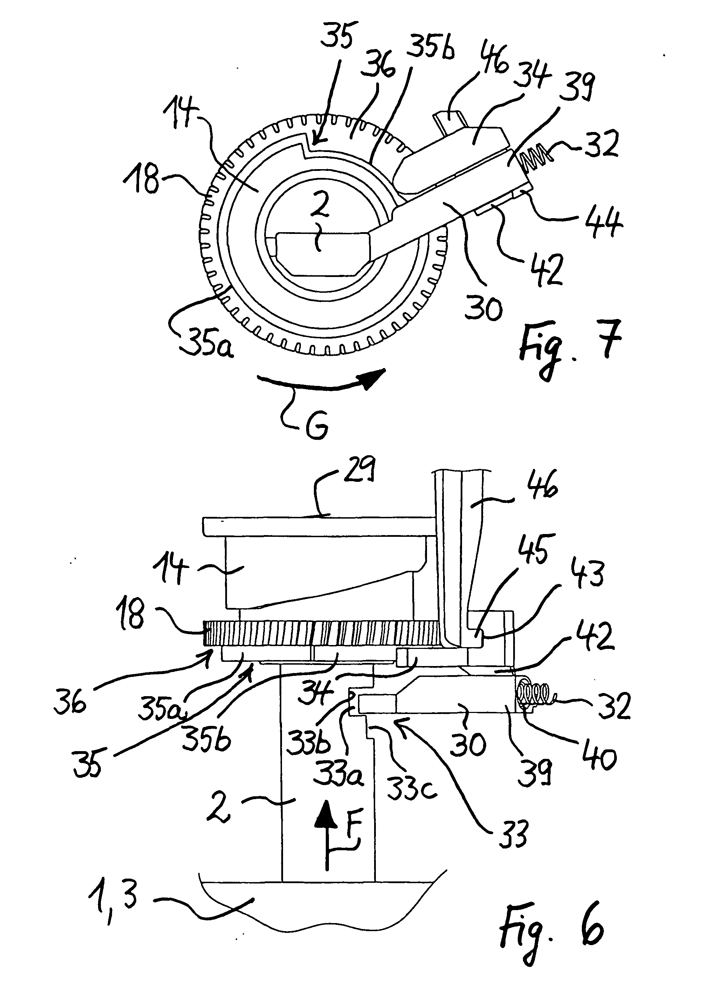

Zur Axialverschiebung des Sperrbolzens 2 in der einen Richtung (Pfeil F in Fig. 5, 6) in die Freigabestellung und in der entgegengesetzten Richtung (Pfeil S in Fig. 10, 11) in die Sperrstellung dient ein mittels eines Elektromotors 13 mit umkehrbarer Drehrichtung hin- und herdrehbares Steuerglied 14. Das Steuerglied 14 ist im wesentlichen koaxial zum Sperrbolzen 2 angeordnet, umgibt den Sperrbolzen 2 und ist im Gehäuse 6 um eine zur Längsachse 7 des Sperrbolzens 2 parallele Achse 15 zwischen einer zu dieser Achse 15 koaxialen Ringfläche 16 des Gehäuses 6 und einem zu dieser Achse 15 koaxialen Kranz von Innenvorsprüngen 17 am Verschlußdeckel 9 der Montageöffnung 10 des Gehäuses 6 drehbar gelagert. Das Steuerglied 14 ist als hülsenförmiges Schneckenrad mit einer Außenverzahnung 18 ausgebildet, in welche eine Schnecke 19 eingreift, die auf der Ausgangswelle 20 des Elektromotors 13 befestigt ist, wie aus Fig. 2 hervorgeht.

Der Sperrbolzen 2 ist mit zwei äußeren Vorsprüngen 21, 22 versehen, mit welchen zwei innere Schrägflächen 23, 24 des Steuergliedes 14 zusammenwirken. Die beiden Schrägflächen 23, 24 weisen dieselbe Steigung auf und gehen jeweils an ihren beiden Enden in zwei Endflächen 25, 26 bzw. 27, 28 über, welche jeweils in einer zur Drehachse 15 des Steuergliedes 14 senkrechten Ebene liegen. Zwischen dem Sperrbolzen 2 und dem Verschlußdeckel 9 der Montageöffnung 10 des Gehäuses 6 ist eine Schraubendruckfeder 29 angeordnet, welche die Vorsprünge 21, 22 des Sperrbolzens 2 gegen die Schrägflächen 23, 24 und die Endflächen 25, 26, 27, 28 des Steuergliedes 14 drückt.

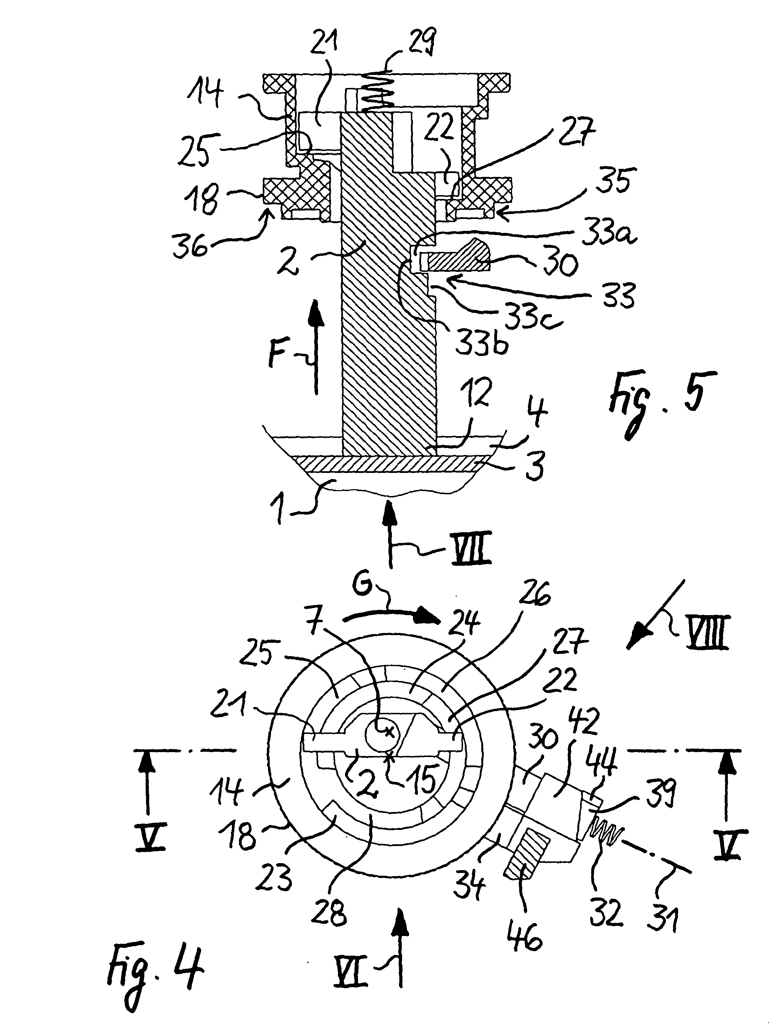

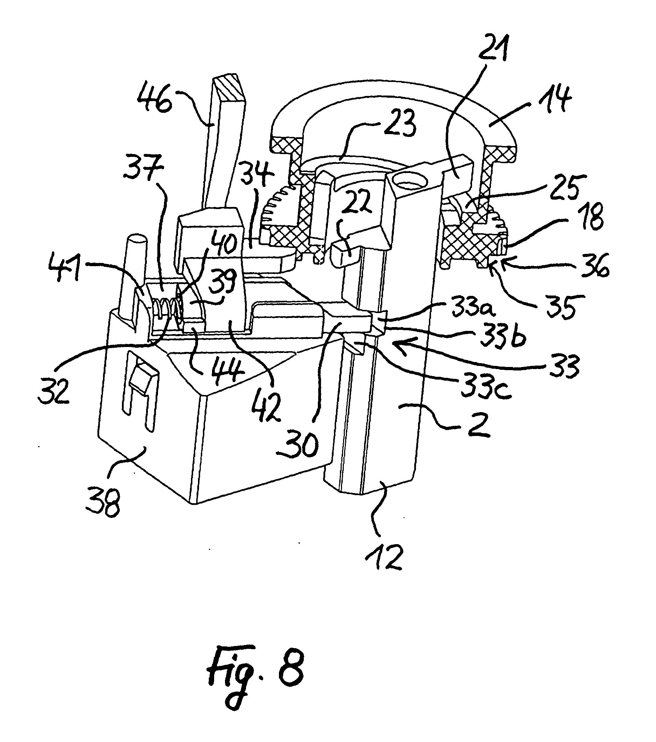

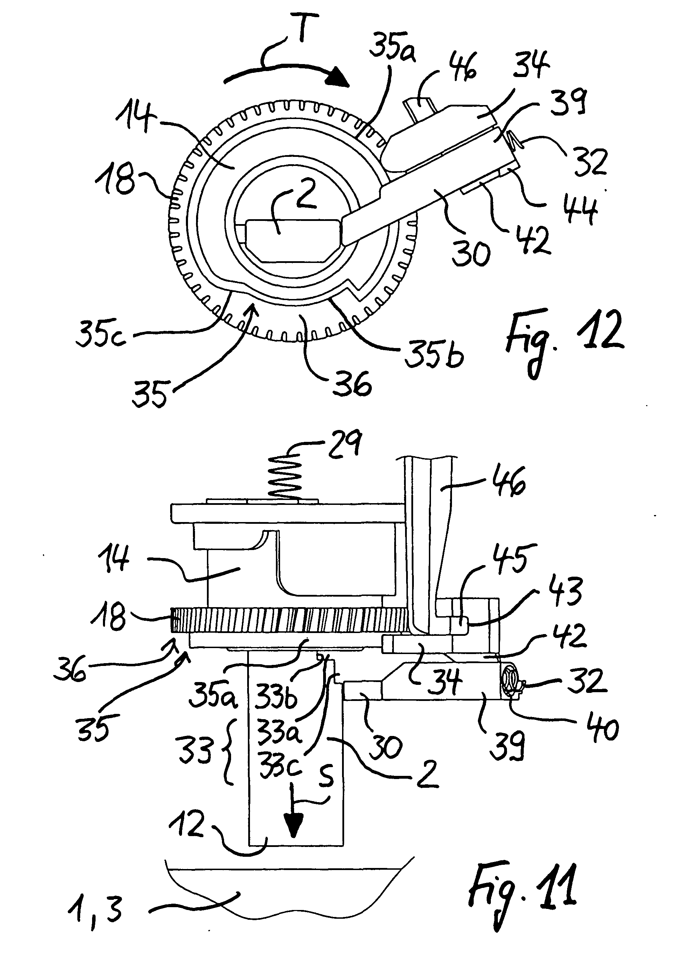

Wenn der Sperrbolzen 2 sich in der Sperrstellung befindet, dann liegen seine beiden Vorsprünge 21, 22 jeweils der zugehörigen Endfläche 25 bzw. 27 des Steuergliedes 14 gegenüber, welche der Lenkspindel 1 näher ist. Wenn der Sperrbolzen 2 die Freigabestellung einnimmt, dann liegen seine beiden Vorsprünge 21, 22 jeweils auf der zugehörigen Endfläche 26 bzw. 28 des Steuergliedes 14 auf, welche der Lenkspindel 1 ferner ist. Um den Sperrbolzen 2 entgegen der Wirkung der Schraubendruckfeder 29 aus der Sperrstellung axial in Richtung des Pfeils F (Fig. 5, 6) in die Freigabestellung zu verschieben und unter der Wirkung der Schraubendruckfeder 29 aus der Freigabestellung axial in Richtung des Pfeils S (Fig. 10, 11) in die Sperrstellung laufen zu lassen, wird der Elektromotor 13 eingeschaltet, so daß er das Steuerglied 14 im Uhrzeigersinn (Pfeil G in Fig. 4, 7) bzw. entgegen dem Uhrzeigersinn (Pfeil T in Fig. 9, 12) dreht und die beiden Vorsprünge 21, 22 des Sperrbolzens 2 über die beiden Schrägflächen 23, 24 des Steuergliedes 14 von den beiden lenkspindelnahen Endflächen 25, 27 zu den beiden lenkspindelfernen Endflächen 26, 28 bzw. umgekehrt von den beiden lenkspindelfernen Endflächen 26, 28 zu den beiden lenkspindelnahen Endflächen 25, 27 des Steuergliedes 14 laufen.

Der Sperrbolzen 2 ist in seiner Sperrstellung mittels eines Sicherungsstiftes 30 blockierbar, so daß er weder durch Prellschläge noch mit Hilfe eines Magneten oder durch sonstwie auf ihn einwirkende Kräfte unbefugt in Richtung des Pfeils F (Fig. 5,6) aus der Sperrstellung herausbewegt werden kann, sondern nur durch Drehen des Steuergliedes 14 in Richtung des Pfeils G (Fig. 4, 7). Dabei ist dafür Vorsorge getroffen, daß die Blockade des Sperrbolzens 2 in seiner Sperrstellung durch den Sicherungsstift 30 nicht aufgehoben werden kann, wenn der Verschlußdeckel 9 der Montageöffnung 10 des Gehäuses 6 entfernt wird.

Der Sicherungsstift 30 ist im Gehäuse 7 axial verschieblich gelagert, wobei seine Längsachse 31 sich in einer zur Längsachse 7 des Sperrbolzens 2 senkrechten Ebene erstreckt, und zwar radial zur Sperrbolzenlängsachse 7. Der Sicherungsstift 30 ist durch eine Schraubendruckfeder 32 in Richtung auf den Sperrbolzen 2 belastet, um in eine seitliche Vertiefung 33 des Sperrbolzens 2 einzugreifen, und wirkt über ein Tastglied 34 mit einer Steuerfläche 35 des Steuergliedes 14 zusammen, um entgegen der Wirkung der Schraubendruckfeder 32 aus der Vertiefung 33 des Sperrbolzens 2 herausbewegt zu werden. Die Steuerfläche 35 des Steuergliedes 14 erstreckt sich um dessen Drehachse 15 herum.

Der Sicherungsstift 30 ist zwischen dem Steuerglied 14 und der Lenkspindel 1 angeordnet. Die Steuerfläche 35 für den Sicherungsstift 30 ist an der der Lenkspindel 1 zugewandten Stirnseite 36 des Steuergliedes 14 vorgesehen.

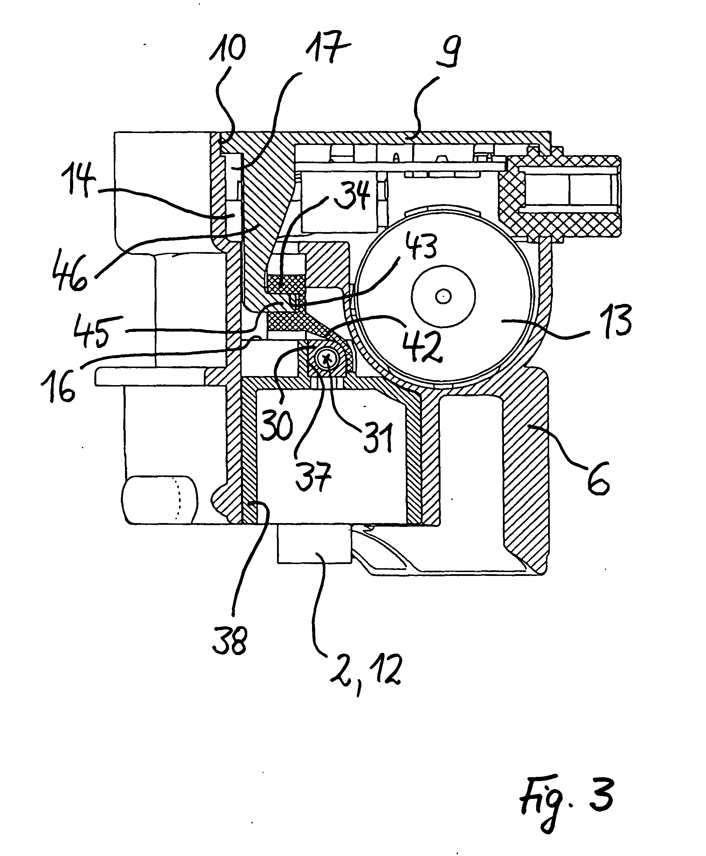

Gemäß Fig. 3, 8, 18 ist der Sicherungsstift 30 in einem Kanal 37 eines mit dem Gehäuse 6 verrasteten Führungssteils 38 axial verschieblich gelagert und stützt sich die zugehörige Schraubendruckfeder 32 einerseits an dem dem Sperrbolzen 2 abgewandten Ende 39 des Sicherungsstiftes 30 in einem Sackloch 40 und andererseits an einer Nase 41 des Führungssteils 38 ab, wobei das zugehörige Tastglied 34 parallel zum Sicherungsstift 30 angeordnet ist und auf der einen Seite einen abstehenden Seitenarm 42 sowie auf der anderen Seite eine Nut 43 aufweist. Mit dem Seitenarm 42 übergreift das Tastglied 34 den Sicherungsstift 30 auf der dem Führungssteil 38 abgewandten Seite und hintergreift es einen seitlichen Vorsprung 44 des Sicherungsstiftes 30, welcher an dessen sperrbolzenfernem Ende 39 auf der dem Tastglied 34 abgewandten Seite vorgesehen ist. Die Nut 43 des Tastgliedes 34 verläuft parallel zum Sicherungsstift 30 und dient zur Aufnahme einer seitlichen Nase 45 eines zum Sperrbolzen 2 parallelen inneren Arms 46 des Verschlußdeckels 9 der Montageöffnung 10 des Gehäuses 6.

Fig. 7, 12, 14, 16 zeigen die Gestalt der Steuerfläche 35 des Steuergliedes 14, gegen welche der Sicherungsstift 30 durch die Schraubendruckfeder 32 über das Tastglied 34 gedrückt wird. Die Steuerfläche 35 besteht aus zwei zur Drehachse 15 des Steuergliedes 14 koaxialen Abschnitten 35a, 35b und einem Übergangsabschnitt 35c, wobei der eine koaxiale Abschnitt 35a einen größeren Abstand von der Steuerglieddrehachse 15 hat und sich über einen verhältnismäßig großen Zentriwinkel erstreckt, der andere koaxiale Abschnitt 35b einen kleineren Abstand von der Steuerglieddrehachse 15 hat und sich über einen relativ kleinen Zentriwinkel erstreckt und die beiden koaxialen Abschnitte 35a, 35b an den beim Drehen des Steuergliedes 14 in der einen oder anderen Richtung (Pfeil G bzw. T) am Tastglied 34 vorbeilaufenden Enden durch den schrägen Übergangsabschnitt 35c miteinander verbunden sind.

Gemäß Fig. 7 liegt das Tastglied 34 an dem der Drehachse 15 des Steuergliedes 14 näheren koaxialen Abschnitt 35b der Steuerfläche 35 an, wenn der Sperrbolzen 2 sich in seiner Sperrstellung befindet, so daß gemäß Fig. 6 der Sicherungsstift 30 in die seitliche Vertiefung 33 des Sperrbolzens 2 eingreift, und zwar in einen tieferen Abschnitt 33a derselben, ohne sich jedoch bis zum Ende 33b der Vertiefung 33 bzw. des tieferen Abschnitts 33a derselben zu erstrecken.

Gemäß Fig. 12 liegt das Tastglied 34 an dem der Drehachse 15 des Steuergliedes 14 ferneren koaxialen Abschnitt 35a der Steuerfläche 35 an, wenn der Sperrbolzen 5 seine Freigabestellung einnimmt, so daß gemäß Fig. 11 der Sicherungsstift 30 sich außerhalb der seitlichen Vertiefung 33 des Sperrbolzens 2 befindet.

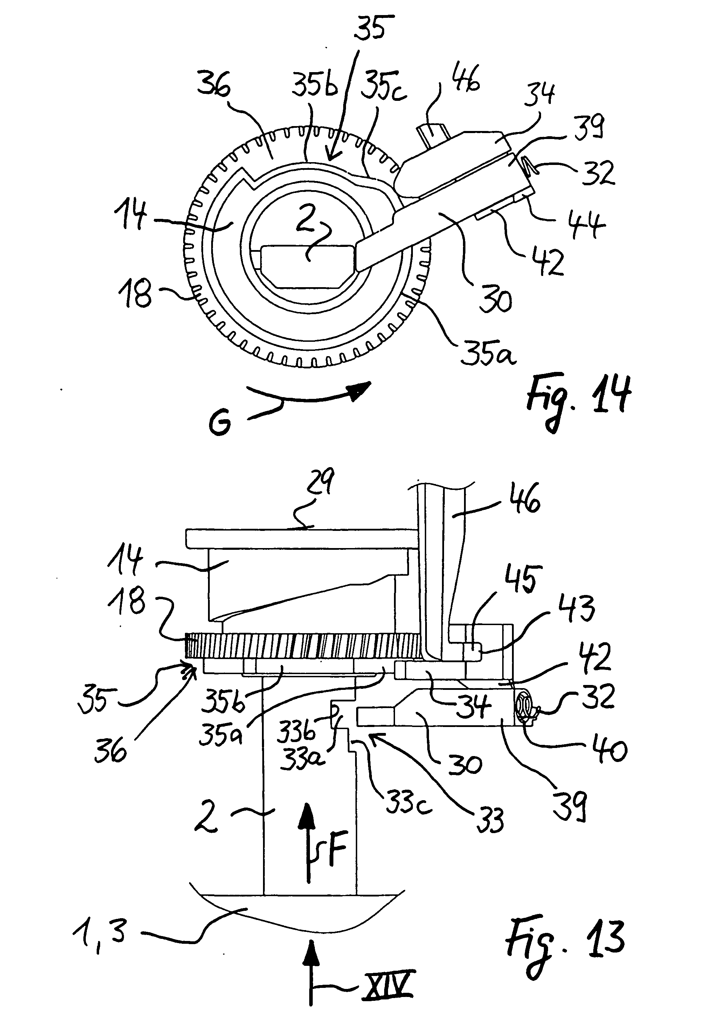

Fig. 13, 14 veranschaulichen, daß die Steuerfläche 35 des Steuergliedes 14 in Bezug auf die Schrägflächen 23, 24 des Steuergliedes 14 so angeordnet ist, daß beim Drehen des Steuergliedes 14 aus der Stellung nach Fig. 4, 7 in Richtung des Pfeils G zunächst der Sicherungsstift 30 aus der seitlichen Vertiefung 33 des Sperrbolzens 2 bzw. aus dem tieferen Abschnitt 33a derselben herausgezogen wird, wenn nämlich das Tastglied 34 am Übergangsabschnitt 35c entlang auf den der Drehachse 15 des Steuergliedes 14 ferneren koaxialen Abschnitt 35a der Steuerfläche 35 des Steuergliedes 14 gleitet, und erst danach der Sperrbolzen 2 aus seiner Sperrstellung (Fig. 5, 6, 13) in Richtung des Pfeils F axial in seine Freigabestellung (Fig. 10, 11) verschoben wird, wenn nämlich die Vorsprünge 21, 22 des Sperrbolzens 2 an den Schrägflächen 23, 24 des Steuergliedes 14 entlanggleiten, während dasselbe in Richtung des Pfeils G bis in die Stellung nach Fig. 9, 12 gedreht wird.

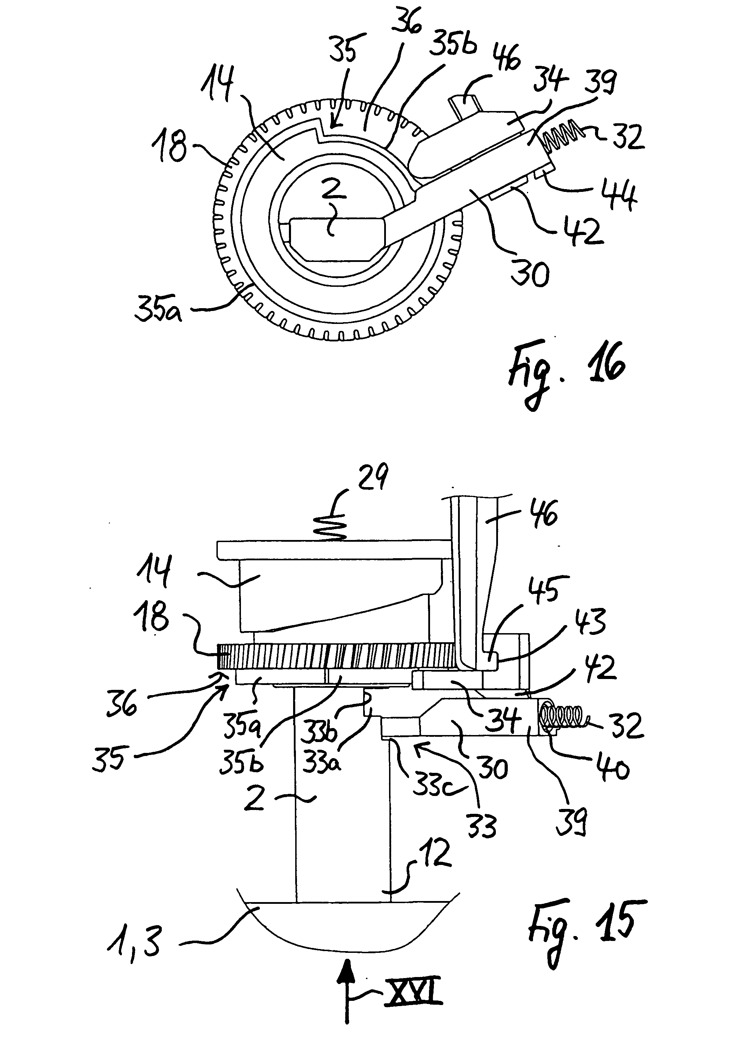

Fig. 15, 16 veranschaulichen, daß das Steuerglied 14 auch dann ungehindert in Richtung des Pfeils T in die Stellung nach Fig. 4, 7, 16 gedreht werden kann, wenn dabei keine Sperrnut 4 der auf der Lenkspindel 1 sitzenden Sperrhülse 3 auf den Sperrbolzen 2 ausgerichtet ist, um dessen freies Ende 12 aufzunehmen. Der Sperrbolzen 2 gelangt in diesem Fall in eine sogenannte Vorsperrstellung, aus welcher er durch die zugehörige Schraubendruckfeder 29 weiter in Richtung auf die Lenkspindel 1 bewegt wird, um mit seinem Ende 12 in eine der beiden benachbarten Sperrnuten 4 der Sperrhülse 3 einzugreifen und seine Sperrstellung einzunehmen, sobald die Lenkspindel 1 so gedreht worden ist, daß die Sperrnut 4 auf den Sperrbolzen 2 ausgerichtet ist. Auch in der Vorsperrstellung wird der Sperrbolzen 2 durch den Sicherungsstift 30 blockiert, welcher dann in einen flacheren Abschnitt 33c der seitlichen Vertiefung 33 des Sperrbolzens 2 eingreift, wie aus Fig. 15 hervorgeht. Wenn der Sperrbolzen 2 sich unter der Wirkung seiner Schraubendruckfeder 29 axial aus der Vorsperrstellung gemäß Fig. 15 in die Sperrstellung gemäß Fig. 6 verschiebt, verläßt der Sicherungsstift 30 den flacheren Abschnitt 33c der seitlichen Vertiefung 33 des Sperrbolzens 2, um unter der Wirkung seiner Schraubendruckfeder 32 in den tieferen Abschnitt 33a der Vertiefung 33 einzutreten.

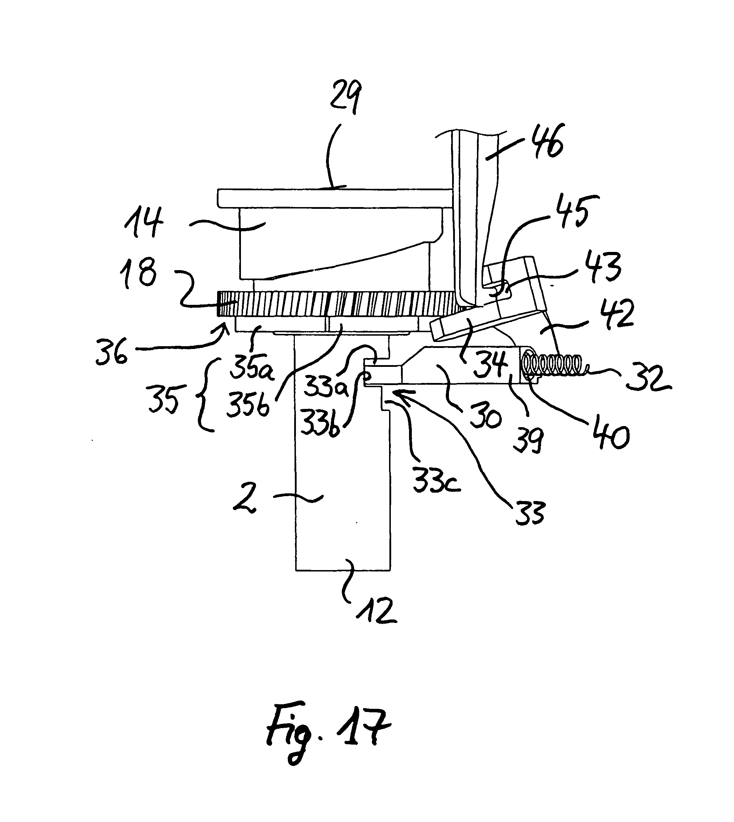

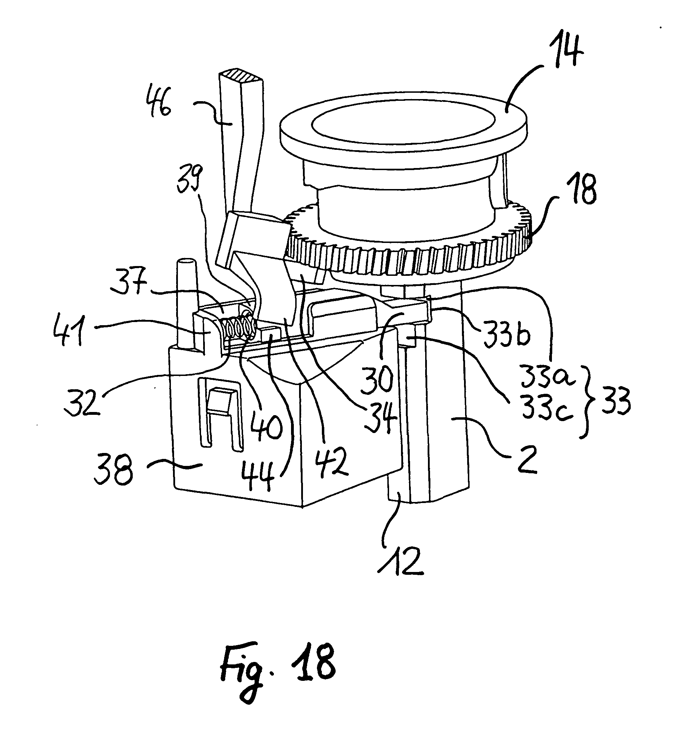

Wenn der Sperrbolzen 2 in seiner Sperrstellung durch den Sicherungsstift 30 blockiert ist und dann der am Gehäuse 6 befestigte Verschlußdeckel 9 für die Montageöffnung 10 des Gehäuses 6 gewaltsam entfernt wird, bewegt gemäß Fig. 17, 18 der Arm 46 des Verschlußdeckels 9 das Tastglied 34 außer Eingriff mit dem Sicherungsstift 30, so daß derselbe unter der Wirkung seiner Schraubendruckfeder 32 bis an das Ende 33b des tieferen Abschnitts 33a der seitlichen Vertiefung 33 des Sperrbolzens 2 in eine Stellung läuft, in welcher das Tastglied 34 mit dem selbst unzugänglichen Sicherungsstift 30 nicht wieder in Eingriff gebracht werden kann und es also unmöglich ist, den Sicherungsstift 30 aus dem tieferen Abschnitt 33a der seitlichen Vertiefung 33 des Sperrbolzens 2 herauszuziehen und die Blockade des letzteren in seiner Sperrstellung aufzuheben.

Das Tastglied 34 wird durch den Arm 46 des Verschlußdeckels 9 verschwenkt, so daß der Seitenarm 42 des Tastgliedes 34 sich vom seitlichen Vorsprung 44 des Sicherungsstiftes 30 entfernt und letzterer durch seine Schraubendruckfeder 32 axial weitergeschoben wird. Wie besonders deutlich aus Fig. 18 hervorgeht, kann dann der Seitenarm 42 des Tastgliedes 34 nicht mehr hinter den seitlichen Vorsprung 44 des Sicherungsstiftes 30 bewegt werden, um den Sicherungsstift 30 mit Hilfe des Tastgliedes 34 entgegen der Wirkung der Schraubendruckfeder 32 aus dem tieferen Abschnitt 33a der seitlichen Vertiefung 33 des Sperrbolzens 2 herauszuziehen. Aus Fig. 3 ist besonders deutlich ersichtlich, daß der Sicherungsstift 30 selbst nicht zugänglich ist. Er ist gegenüber dem Tastglied 34 vom Arm 46 des Verschlußdeckels 9 weg versetzt und sein Vorsprung 44 ist auf der dem Tastglied 34 abgewandten Seite vorgesehen.

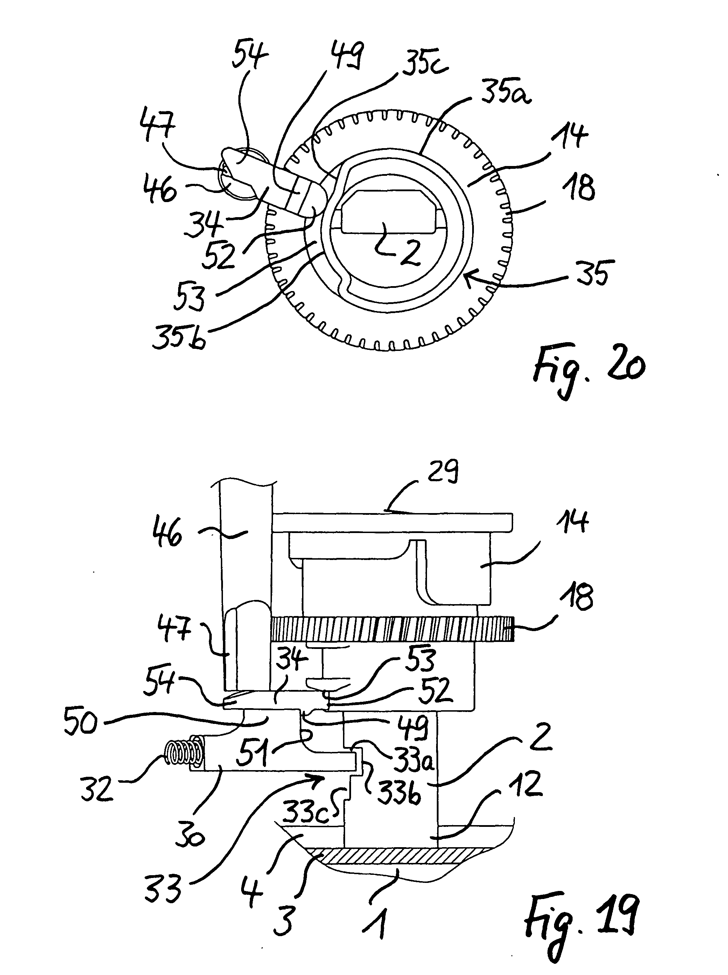

Die in Fig. 19 bis 23 dargestellte Vorrichtung zum Sperren der Lenkspindel 1 eines Kraftfahrzeugs unterscheidet sich im wesentlichen nur dadurch von derjenigen nach Fig. 1 bis 18, daß das Tastglied 34 auf andere Weise mit dem Sicherungsstift 30 und dem Verschlußdeckelarm 46 zusammenwirkt. Das zum Sicherungsstift 30 parallele Tastglied 34 wird durch das freie Ende 47 des Verschlußdeckelarms 46 entgegen der Wirkung einer Schraubendruckfeder 48 in Anlage am Sicherungsstift 30 gehalten, um letzteren mit einer Nase 49 zu hintergreifen.

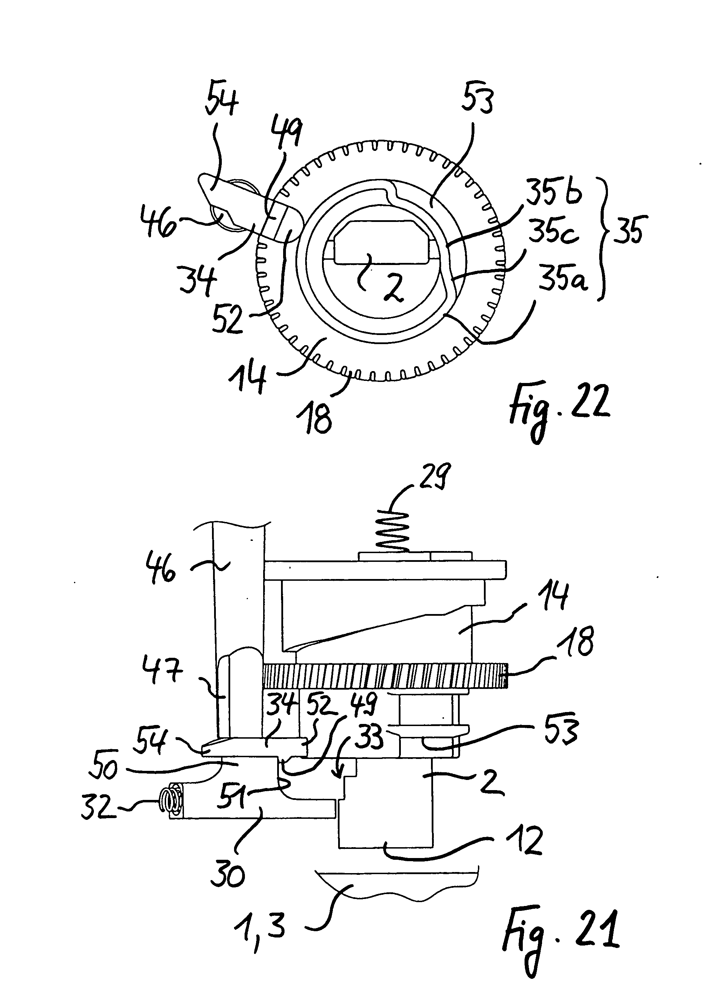

Das als schmale Platte ausgebildete Tastglied 34 ist zwischen dem freien Ende 47 des Verschlußdeckelarms 46 und einem Längsvorsprung 50 des Sicherungsstiftes 30 angeordnet, welcher auf der der Lenkspindel 1 abgewandten Seite des Sicherungsstiftes 30 vorgesehen ist. Die Nase 49 des Tastgliedes 34 hintergreift das der Steuerfläche 35 des Steuergliedes 14 zugewandte Ende 51 des Längsvorsprungs 50. Der durch die Schraubendruckfeder 32 belastete Sicherungsstift 30 und das an der Steuerfläche 35 des Steuergliedes 14 anliegende Tastglied 34 sind gemeinsam unter dem freien Ende 47 des Verschlußdeckelarms 46 zwischen der Axialstellung gemäß Fig. 19, 20 und der Axialstellung nach Fig. 21, 22 hin und her längsverschiebbar, um den Sperrbolzen 2 in seiner Sperrstellung zu blockieren bzw. die Blockade aufzuheben, so daß er axial in seine Freigabestellung verschoben werden kann.

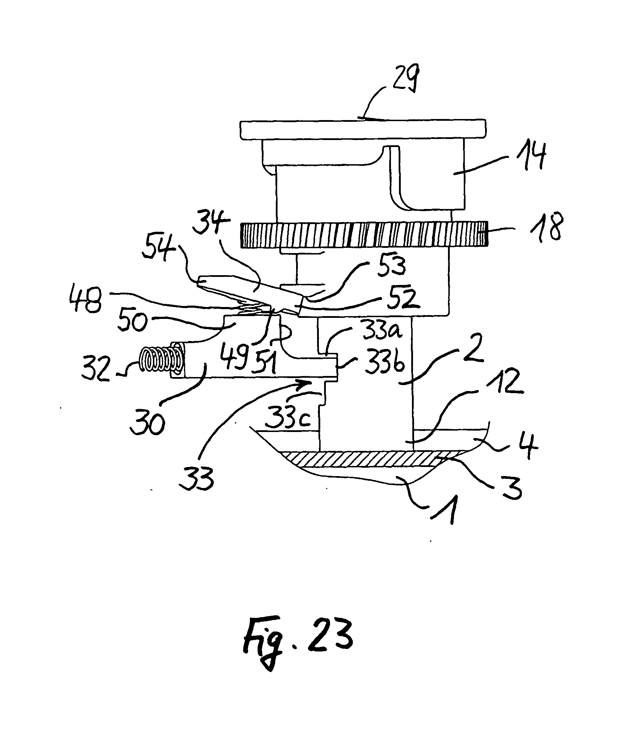

Wenn der Sicherungsstift 30 den Sperrbolzen 2 in seiner Sperrstellung blockiert und in den tieferen Abschnitt 33a der seitlichen Vertiefung 33 des Sperrbolzens 2 eingreift, dann ragt gemäß Fig. 19 das Tastglied 34 mit dem an der Steuerfläche 35 des Steuergliedes 14 anliegenden Ende 52 unter eine radiale Fläche 53 des Steuergliedes 14 und mit dem anderem Ende 54 unter das freie Ende 47 des Verschlußdeckelarms 46. Wird in dieser Situation der Verschlußdeckelarm 46 entfernt, dann kippt die in einem Sackloch des Längsvorsprungs 50 des Sicherungsstiftes 30 angeordnete Schraubendruckfeder 48 das Tastglied 34 um sein steuerflächenseitiges Ende 52 vom Sicherungsstift 30 weg, so daß die Nase 49 des Tastgliedes 34 außer Eingriff mit dem steuerflächenseitigen Ende 51 des Längsvorsprungs 50 des Sicherungsstiftes 30 kommt und letzerer unter der Wirkung seiner Schraubendruckfeder 32 vollständig in den tieferen Abschnitt 33a der seitlichen Vertiefung 33 des Sperrbolzens 2 läuft, um am Ende 33b des tieferen Abschnitts 33a anzuliegen und mit dem Längsvorsprung 50 die Nase 49 des Tastgliedes 34 zu untergreifen, wie aus Fig. 23 ersichtlich ist. Die Nase 49 kann dann nicht wieder in Eingriff mit dem Längsvorsprung 50 des Sicherungsstiftes 30 gebracht werden, um den Sicherungsstift 30, der selbst unzugänglich ist, mit Hilfe des Tastgliedes 34 aus dem tieferen Abschnitt 33a der seitlichen Vertiefung 33 des Sperrbolzens 2 zurückzuziehen und die Blockade des Sperrbolzens 2 in seiner Sperrstellung aufzuheben.

Abwandlungen von den dargestellten und geschilderten Ausführungsformen sind durchaus möglich. Beispielsweise ist es nicht unbedingt erforderlich, daß die Drehachse 15 des Steuerglieds 14 parallel zur Längsachse 7 des Sperrbolzens 2 verläuft, sondern kann sie auch mit der Längsachse 7 des Sperrbolzens 2 zusammenfallen. Auch muß der Sicherungsstift 30 nicht unbedingt radial zur Sperrbolzenlängsachse 7 angeordnet sein. Statt über die Schnecke 19 kann der Elektromotor 13 auch über ein Ritzel mit dem Steuerglied 14 zusammenwirken, welches in eine entsprechende Außenverzahnung des Steuergliedes 14 eingreift.

## Patentansprüche

1. Vorrichtung zum Sperren der Lenkspindel (1) eines Kraftfahrzeugs gegen Drehen mittels eines in einem Gehäuse (6) über ein hin- und herdrehbares Steuerglied (14) zwischen einer Sperrstellung und einer Freigabestellung axial hin- und herbewegbaren Sperrbolzens (2), welcher mit Hilfe eines im Gehäuse (6) beweglich gelagerten, federbelasteten Sicherungsgliedes blockierbar ist, das unter der Wirkung seiner Federbelastung in eine seitliche Vertiefung (33) des Sperrbolzens (2) eingreift und zur Bewegung entgegen der Wirkung seiner Federbelastung aus der Vertiefung (33) heraus mit dem Steuerglied (14) des Sperrbolzens (2) zusammenwirkt, wobei
a) das Steuerglied (14) um eine mit der Längsachse (7) des Sperrbolzens (2) zusammenfallende oder zur Längsachse (7) des Sperrbolzens (2) parallele Achse (15) im Gehäuse (6) drehbar gelagert ist und
b) das Sicherungsglied von einem im Gehäuse (6) axial verschieblich gelagerten Stift (30) gebildet ist, dessen Längsachse (31) in einer zur Längsachse (7) des Sperrbolzens (2) senkrechten Ebene verläuft und der unter der Wirkung seiner Federbelastung an einer Steuerfläche (35) des Steuergliedes (14) anliegt, welche sich um die Drehachse (15) des Steuergliedes (14) herum erstreckt,
**dadurch gekennzeichnet, daß** der zur Blockierung des Sperrbolzens (2) in der Sperrstellung vorgesehene Sicherungsstift (30) mit der Steuerfläche (35) am Steuerglied (14) über ein Tastglied (34) zusammenwirkt, an welchem ein Arm (46) eines Verschlußdeckels (9) für eine Montageöffnung (10) des Gehäuses (6) derart angreift, daß bei Entfernung des Verschlußdeckels (9) von der Montageöffnung (10) das Tastglied (34) sich außer Eingriff mit dem Sicherungsstift (30) bewegt und der Sicherungsstift (30) unter der Wirkung seiner Federbelastung bis an das Ende (33b) der Vertiefung (33) des Sperrbolzens (2) in eine Stellung läuft, in welcher das Tastglied (34) mit dem Sicherungsstift (30) nicht mehr in Eingriff bringbar ist.

2. Vorrichtung nach Anspruch 1, **dadurch gekennzeichnet, daß** das Tastglied (34) parallel zum Sicherungsstift (30) angeordnet ist, einen Seitenarm (42) zum Hintergreifen eines seitlichen Vorsprungs (44) des Sicherungsstiftes (30) aufweist und mit einer zum Sicherungsstift (30) parallelen Nut (43) für den Eingriff des Arms (46) des Verschlußdeckels (9) versehen ist.

3. Vorrichtung nach Anspruch 1, **dadurch gekennzeichnet, daß** das Tastglied (34) parallel zum Sicherungsstift (30) angeordnet ist und durch das freie Ende (47) des Arms (46) des Verschlußdeckels (9) entgegen der Wirkung einer Feder (48) in Anlage am Sicherungsstift (30) gehalten wird, um den Sicherungsstift (30) mit einer Nase (49) zu hintergreifen.

4. Vorrichtung nach Anspruch 1,2 oder 3, **dadurch gekennzeichnet, daß** die Montageöffnung (10) des Gehäuses (6) auf der der Lenkspindel (1) abgewandten Seite des Gehäuses (6) vorgesehen ist.

5. Vorrichtung nach Anspruch 4, **dadurch gekennzeichnet, daß** der Arm (46) des Verschlußdeckels (9) der Montageöffnung (10) des Gehäuses (6) sich parallel zum Sperrbolzen (2) erstreckt.

6. Vorrichtung nach einem der vorstehenden Ansprüche, **dadurch gekennzeichnet, daß** die Vertiefung (33) des Sperrbolzens (2) einen tieferen Abschnitt (33a) und einen flacheren Abschnitt (33c) zur Aufnahme des Sicherungsstiftes (30) in der Sperrstellung bzw. in einer Vorsperrstellung des Sperrbolzens (2) aufweist.

7. Vorrichtung nach einem der vorstehenden Ansprüche, **dadurch gekennzeichnet, daß** das Steuerglied (14) den Sperrbolzen (2) umschließt.

8. Vorrichtung nach einem der vorstehenden Ansprüche, **dadurch gekennzeichnet, daß** der Sicherungsstift (30) zwischen dem Steuerglied (14) und der Lenkspindel (1) angeordnet ist und die Steuerfläche (35) für den Sicherungsstift (30) an der der Lenkspindel (1) zugewandten Stirnseite (36) des Steuergliedes (14) vorgesehen ist.

9. Vorrichtung nach einem der vorstehenden Ansprüche, **gekennzeichnet durch** eine solche Ausbildung der Steuerfläche (35) für den Sicherungsstift (30) am Steuerglied (14), daß beim Drehen des Steuergliedes (14) zur Axialverschiebung des Sperrbolzens (2) aus der Sperrstellung in die Freigabestellung zunächst der Sicherungsstift (30) aus der Vertiefung (33) des Sperrbolzens (2) herausbewegt wird.

10. Vorrichtung nach einem der vorstehenden Ansprüche, **dadurch gekennzeichnet, daß** das Steuerglied (14) mittels eines Elektromotors (13) mit umkehrbarer Drehrichtung hin- und herdrehbar ist.

11. Vorrichtung nach Anspruch 10, **dadurch gekennzeichnet, daß** der Elektromotor (13) über ein Ritzel oder eine Schnecke (19) mit dem Steuerglied (14) zusammenwirkt, welches bzw. welche in eine Außenverzahnung (18) des Steuergliedes (14) eingreift.

## Claims

1. Device for locking the steering spindle (1) of a motor vehicle against rotation by means of a locking bolt (2), which can be displaced axially to and fro between a locked position and a release position within a housing (6) by means of a control element (14), which can be rotated to and fro, wherein the locking bolt (2) can be fixed by means of a spring-loaded securing element mounted in a displaceable manner within the housing (6), which engages under the force of its spring loading in a lateral recess (33) of the locking bolt (2) and which cooperates with the control element (14) of the locking bolt (2) in order to be moved against the force of its spring loading out of the recess (33), wherein
a) the control element (14) is mounted in the housing (6) in such a manner that it can be rotated about an axis (15), which is either coincident with or parallel to the longitudinal axis (7) of the locking bolt (2), and
b) the securing element is formed by a pin (30) mounted in an axially displaceable manner in the housing (6), of which the longitudinal axis (31) runs in a plane perpendicular to the longitudinal axis (7) of the locking bolt (2) and which rests under the force of its spring loading against a control surface (35) of the control element (14) extending around the axis of rotation (15) of the control element (14),
**characterised in that**
the securing pin (30) provided for fixing the locking bolt (2) in the locked position cooperates with the control surface (35) on the control element (14) via a sensing element (34), with which an arm (46) of a sealing lid (9) for an assembly aperture (10) of the housing (6) engages in such a manner, that upon the removal of the sealing lid (9) from the assembly aperture (10), the sensing element (34) moves to disengage from the securing pin (30), and, under the force of its spring loading, the securing pin (30) runs to the end (33b) of the recess (33) of the locking bolt (2) into a position, in which the sensing element (34) can no longer be brought into engagement with the securing pin (30).

2. Device according to claim 1,
**characterised in that**
the sensing element (34) is arranged parallel to the securing pin (30), has a lateral arm (42) for engagement behind a lateral projection (44) of the securing pin (30) and is provided with a groove (43) parallel to the securing pin (30) for the engagement of the arm (46) of the sealing lid (9).

3. Device according to claim 1,
**characterised in that**
the sensing element (34) is arranged parallel to the securing pin (30) and is held in contact with the securing pin (30) against the force of a spring (48) by the free end (47) of the arm (46) of the sealing lid (9), in order to engage behind the securing pin (30) with a tab (49).

4. Device according to claim 1, 2 or 3,
**characterised in that**
the assembly aperture (10) of the housing (6) is provided on the side of the housing (6) facing away from the steering spindle (1).

5. Device according to claim 4,
**characterised in that**
the arm (46) of the sealing lid (9) of the assembly aperture (10) of the housing (6) extends parallel to the locking bolt (2).

6. Device according to any one of the preceding claims,
**characterised in that**
the recess (33) of the locking bolt (2) has a deeper portion (33a) and a shallower portion (33c) for receiving the securing pin (30) in the locked position and respectively in a pre-locked position of the locking bolt (2).

7. Device according to any one of the preceding claims,
**characterised in that**
the control element (14) encloses the locking bolt (2).

8. Device according to any one of the preceding claims,
**characterised in that**
the securing pin (30) is arranged between the control element (14) and the steering spindle (1), and the control surface (35) for the securing pin (30) is provided on the end face (36) of the control element (14) facing towards the steering spindle (1).

9. Device according to any one of the preceding claims,
**characterised by**
a geometry of the control surface (35) for the securing pin (30) on the control element (14), such that, when the control element (14) is rotated in order to displace the locking bolt (2) axially out of the locked position into the release position, the securing pin (30) is first moved out of the recess (33) of locking bolt (2).

10. Device according to any one of the preceding claims,
**characterised in that**
the control element (14) can be rotated to and fro by means of an electric motor (13) with reversible direction of rotation.

11. Device according to claim 10,
**characterised in that**
the electric motor (13) cooperates with the control element (14) via a pinion or a worm (19), which engages with external teeth (18) of the control element (14).

## Revendications

1. Dispositif pour le verrouillage de la colonne de direction (1) d'un véhicule à moteur pour empêcher sa rotation au moyen d'un goujon de verrouillage (2) mobile en va-et-vient dans le sens axial dans un boîtier (6) entre une position de verrouillage et une position de déverrouillage à l'aide d'un organe de commande (14) pouvant tourner en va-et-vient, lequel goujon de verrouillage peut être bloqué à l'aide d'un organe de fixation contraint par ressort et supporté de manière mobile dans le boîtier (6), qui se met en prise sous l'effet de sa contrainte par ressort dans un renfoncement latéral (33) du goujon de verrouillage (2) et qui coopère pour sortir du renfoncement (33) contre l'action de sa contrainte par ressort avec l'organe de commande (14) du goujon de verrouillage (2), dans lequel
a) l'organe de commande (14) est supporté avec possibilité de rotation autour d'un axe (15) parallèle à l'axe longitudinal (7) du goujon de verrouillage (2) ou coïncidant avec l'axe longitudinal (7) du goujon de verrouillage (2) dans le boîtier (6) et
b) l'organe de fixation est formé par une goupille (30) supportée de manière mobile dans le sens axial dans le boîtier (6), dont l'axe longitudinal (31) passe dans un plan perpendiculaire à l'axe longitudinal (7) du goujon de verrouillage (2) et qui repose sous l'effet de sa contrainte par ressort sur une surface de guidage (35) de l'organe de commande (14) qui s'étend autour de l'axe de rotation (15) de l'organe de commande (14),
**caractérisé en ce que** la goupille de maintien (30) prévue pour bloquer le goujon de verrouillage (2) dans la position de verrouillage coopère avec la surface de guidage (35) de l'organe de commande (14) par l'intermédiaire d'un organe palpeur (34), sur lequel un bras (46) d'un couvercle d'obturation (9) pour une ouverture de montage (10) du boîtier (6) se met en prise de telle sorte que lorsque le couvercle d'obturation (9) est retiré de l'ouverture de montage (10), l'organe palpeur (34) quitte sa prise avec la goupille de maintien (30) et la goupille de maintien (30) se déplace sous l'effet de sa contrainte par ressort jusqu'à l'extrémité (33b) du renfoncement (33) du goujon de verrouillage (2) dans une position dans laquelle l'organe palpeur (34) ne peut plus être mis en prise avec la goupille de maintien (30).

2. Dispositif selon la revendication 1, **caractérisé en ce que** l'organe palpeur (34) est disposé parallèlement à la goupille de maintien (30), possède un bras latéral (42) destiné à passer derrière une saillie latérale (44) de la goupille de maintien (30) et est pourvu d'une gorge (43) parallèle à la goupille de maintien (30) pour la prise du bras (46) du couvercle d'obturation (9).

3. Dispositif selon la revendication 1 **caractérisé en ce que** l'organe palpeur (34) est disposé parallèlement à la goupille de maintien (30) et retenu par l'extrémité libre (47) du bras (46) du couvercle d'obturation (9) contre l'action d'un ressort (48) en appui sur la goupille de maintien (30), pour saisir la goupille de maintien (30) par l'arrière à l'aide d'un ergot (49).

4. Dispositif selon la revendication 1, 2 ou 3, **caractérisé en ce que** l'ouverture de montage (10) du boîtier (6) est prévue sur le côté du boîtier (6) écarté d e la colonne de direction (1).

5. Dispositif selon la revendication 4, **caractérisé en ce que** le bras (46) du couvercle d'obturation (9) de l'ouverture de montage (10) du boîtier (6) s'étend parallèlement au goujon de verrouillage (2).

6. Dispositif selon l'une quelconque des revendications précédentes, **caractérisé en ce que** le renfoncement (33) du goujon de verrouillage (2) possède une partie plus profonde (33a) et une partie moins profonde (33c) pour recevoir la goupille de maintien (30) dans la position de verrouillage ou dans une position de pré-verrouillage du goujon de verrouillage (2).

7. Dispositif selon l'une quelconque des revendications précédentes, **caractérisé en ce que** l'organe de commande (14) entoure le goujon de verrouillage (2).

8. Dispositif selon l'une quelconque des revendications précédentes, **caractérisé en ce que** la goupille de maintien (30) est disposée entre l'organe de commande (14) et la colonne de direction (1) et la surface de guidage (35) pour la goupille de maintien (30) est prévue sur la face (36) de l'organe de commande (14) orientée vers la colonne de direction (1).

9. Dispositif selon l'une quelconque des revendications précédentes, **caractérisé en ce que** la conformation de la surface de guidage (35) pour la goupille de maintien (30) sur l'organe de commande (14) est telle que lors de la rotation de l'organe de commande (14) pour le déplacement axial du goujon de verrouillage (2) de la position de verrouillage à la position de déverrouillage, la goupille de maintien (30) soit d'abord retirée du renfoncement (33) du goujon de verrouillage (2).

10. Dispositif selon l'une quelconque des revendications précédentes, **caractérisé en ce que** l'organe de commande (14) est mobile en rotation en va-et-vient au moyen d'un moteur électrique (13) à sens de rotation inversable.

11. Dispositif selon la revendication 10, **caractérisé en ce que** le moteur électrique (13) coopère avec l'organe de commande (14) par l'intermédiaire d'un pignon ou d'une vis sans fin (19) qui se met en prise dans une denture extérieure (18) de l'organe de commande (14).
